Europäisches Patentamt

European Patent Office

Office européen des brevets

(11) Veröffentlichungsnummer: **0 249 133**
**A2**

## EUROPÄISCHE PATENTANMELDUNG

(21) Anmeldenummer: 87107984.4

(22) Anmeldetag: 02.06.87

(51) Int. Cl.4: **F16B 5/02**

(30) Priorität: **12.06.86 DE 3619847**

(43) Veröffentlichungstag der Anmeldung:
**16.12.87 Patentblatt 87/51**

(84) Benannte Vertragsstaaten:
**DE FR GB IT SE**

(71) Anmelder: **Siemens Aktiengesellschaft Berlin
und München
Wittelsbacherplatz 2
D-8000 München 2(DE)**

(72) Erfinder: **Swoboda, Ralf
Neufriedenheimerstrasse 4
D-8000 München 70(DE)**

(54) **Universalflansch zur Montage von Anbauteilen.**

(57) Mit dem Universalflansch soll das Adaptieren beliebiger Anbauteile und Werkzeuge zum Beispiel an Handhabungsgeräte, insbesondere Industrieroboter, ermöglicht werden. Der Flansch besteht aus zwei lagefixierten, verschraubbaren Platten, von denen die eine als Gegenstück zum Geräteflansch ausgebildet ist und die andere mit abgesetzten Nuten zur Befestigung am Anbauteil, zum Beispiel Greifer-oder Werkzeugflansch, dient.

FIG 1

EP 0 249 133 A2

## Universalflansch zur Montage von Anbauteilen.

Die Erfindung betrifft einen Universalflansch zur Montage beliebiger Anbauteile und Werkzeuge an zum Beispiel Handhabungsgeräten, insbesondere Industrierobotern.

Bei der Entwicklung von Fertigungskonzepten mit Industrierobotern und dabei durchzuführenden Vorversuchen werden häufig Greifer oder Werkzeuge aus dem Laborbestand eingesetzt. Da diese meist auch für verschiedene Industrieroboter gebaut werden, unterscheiden sie sich in der Flanschausführung, insbesondere im Lochbild zur Befestigung am Industrieroboter-Flansch.

Bisher wurde zu jedem Greifer oder Werkzeug ein spezieller, meist teilbarer Adapter, gebaut.

Der Erfindung liegt die Aufgabe zugrunde, ein universelles Verbindungsstück zu schaffen, mit dem beliebige Anbauteile an zum Beispiel Handhabungsgeräten, insbesondere Industrierobotern, einfach montiert und demontiert werden können, ohne daß eine Nachjustierung erforderlich ist.

Diese Aufgabe wird durch die in den Patentansprüchen aufgeführten Merkmale gelöst.

Der Vorteil der Erfindung liegt darin begründet, daß mit dem Universalflansch das Adaptieren unterschiedlicher Greif-und Werkzeugflansche zum Beispiel an verschiedene Industrieroboter-Flansche ermöglicht wird. Damit erübrigt es sich, für jedes Anbauteil einen speziellen Adapter herzustellen. Durch die besondere Anordnung der Nutenteilung 120/180 werden Flanschteilungen von 60, 90, 120 und 180 Grad abgedeckt. Die Betätigungsrichtung der Universalflanschverschraubung steht senkrecht zur Achse Gerät/Anbauteil.

Die Erfindung wird anhand der Figuren erläutert. Es zeigen:

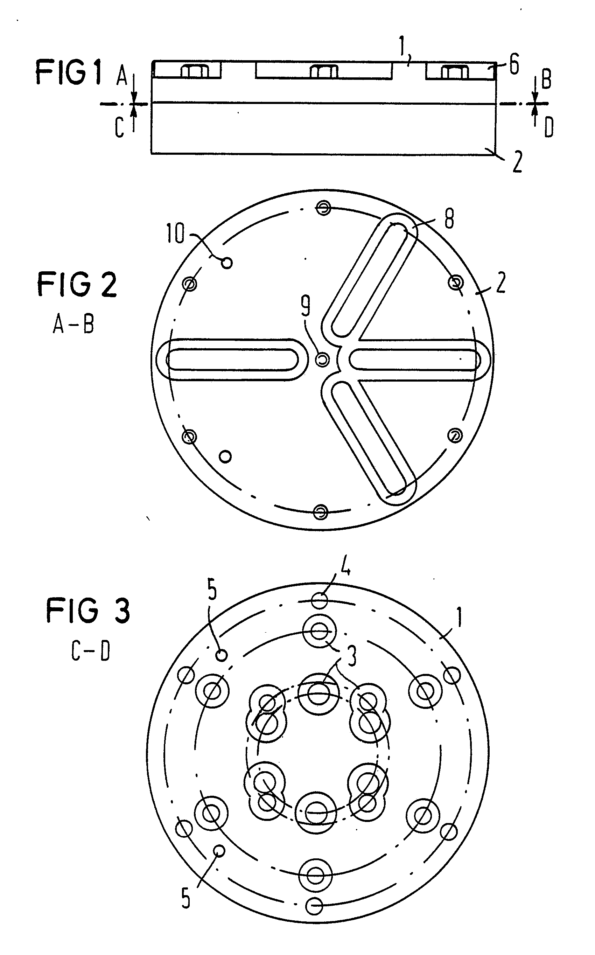

Figur 1 die Seitenansicht eines Universalflansches,

Figur 2 die Anbauteilseite von oben gesehen, Schnitt A/B,

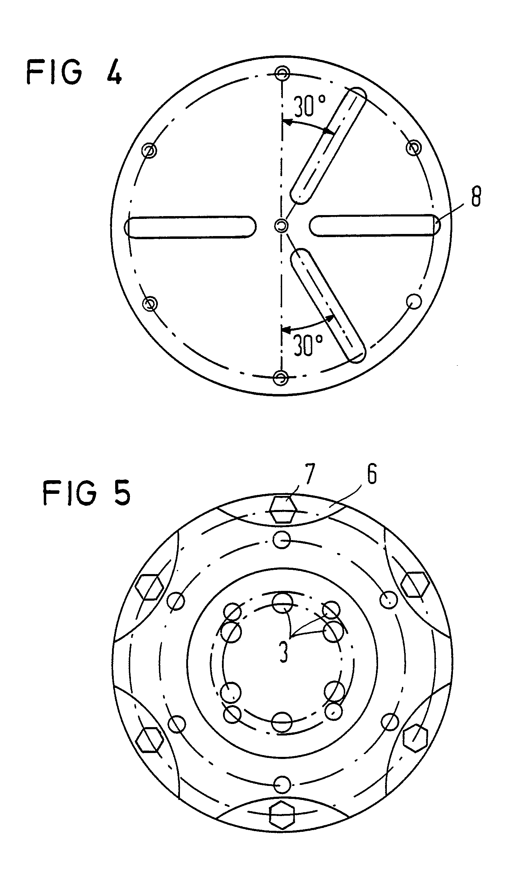

Figur 3 die Geräteteilseite von unten gesehen, Schnitt C/D,

Figur 4 die Anbauteilseite von unten gesehen im zusammengeschraubten Zustand und

Figur 5 die Geräteteilseite von oben gesehen im zusammengeschraubten Zustand.

In den Figuren sind mit 1 die Platte für die Geräteteilseite und mit 2 die Platte für die Anbauseite bezeichnet. In der Platte 1 sind dem Geräteflansch entsprechende Bohrbilder 3 und die Verschraubungsbohrungen 4 eingezeichnet. Mit 5 sind Zentrierbohrungen gekennzeichnet. In dieser Platte sind am Rand ferner Ausnehmungen 6 vorgesehen, die einen ungehinderten Eingriff des Montagewerkzeuges zum Andrehen der Befestigungsschrauben 7 ermöglichen.

In der Anbauteilseite der Platte 2 sind abgesetzte Nuten 8 in einer Teilung 120 Grad/180 Grad angebracht. In der Mitte der Platte 2 ist eine Gewindebohrung 9 zur Zentrierung des Anbauteils vorgesehen. Mit 10 sind Paßstifte bezeichnet.

Wenn nun die Aufgabe besteht, beispielsweise zu Versuchszwecken an einen Industrieroboter ein Werkzeug zu montieren, dann wird zuerst an den Flansch des Roboters die Platte 1 über die Bohrungen 3 angeschraubt. Anschließend wird das Werkzeug, zum Beispiel ein Greifer, an der Platte 2 in den Nuten 8 zum Beispiel mittels Imbusschrauben befestigt, wobei eine Zentrierung über eine angespitzte Madenschraube in der Bohrung 9 erfolgen kann. Die Nuten 8 ermöglichen aber auch einen exzentrischen Anbau. Abschließend werden die zwei Flanschhälften 1 und 2 über die Schrauben 7 miteinander verbunden.

Der dargestellte Universalflansch ist zur Befestigung an zwei Industrierobotern vorbereitet.

Für die Zentrierung des Universalflansches zum Beispiel zu den Handhabungsgeräten, insbesondere Industrierobotern, sind drei einsetzbare Zentrierstücke vorgesehen. Zentrierstücke sind in den Zeichnungen nicht einzeln dargestellt.

Eine weitere Variante dieses Universal-Flansches besteht aus zwei Platten mit Langlöchern und Nuten in der angegebenen Teilung. Damit wird die Abhängigkeit vom Industrieroboter-Flansch-Bohrbild vermieden.

**Ansprüche**

1. Universalflansch zur Montage beliebiger Anbauteile an zum Beispiel Handhabungsgeräten, insbesondere Industrierobotern, **dadurch gekennzeichnet,** daß der Flansch aus zwei lagefixierten (5/10), verschraubbaren (7) Platten (1, 2) besteht, von denen die eine (1) als Gegenstück zum Geräteflansch ausgebildet ist und die andere (2) mit abgesetzten Nuten (8) zur Befestigung am Anbauteil, zum Beispiel Greifer-oder Werkzeugflansch, versehen ist.

2. Universalflansch nach Anspruch 1, **dadurch gekennzeichnet,** daß in der anderen Platte (2) zur Befestigung am Anbauteil mittig eine Gewindebohrung (9) mit einer angespitzten Madenschraube vorgesehen ist.

3. Universalflansch nach Anspruch 1, **dadurch gekennzeichnet,** daß die Nuten (8) in einer 120 Grad/180 Grad Teilung angeordnet sind.

4. Universalflansch nach Anspruch 1, **dadurch gekennzeichnet,** daß die Betätigungsrichtung für die Verschraubung (7) der Universalflanschhälften (1, 2) senkrecht zur Achse Gerät/Anbauteil erfolgt.

FIG 1

FIG 2
A-B

FIG 3
C-D

FIG 4

30°

30°

8

FIG 5

7   6

3